# EUROPÄISCHE PATENTSCHRIFT

(11) **EP 1 716 016 B1**
(45) Veröffentlichungstag und Bekanntmachung des Hinweises auf die Patenterteilung: **01.08.2012**
(21) Anmeldenummer: 05706685.4
(22) Anmeldetag: 15.01.2005
(51) Int. Cl.: B60J 7/12, B60J 7/20

(54) **CABRIOLET-FAHRZEUG**
CABRIOLET
CABRIOLET

(30) Priorität: 20.01.2004 DE 102004003021
(43) Veröffentlichungstag der Anmeldung: 02.11.2006
(73) Patentinhaber: Wilhelm Karmann GmbH, 49084 Osnabrück (DE)
(72) Erfinder: KREILING, Nils, 49078 Osnabrück (DE); EICHHOLZ, Stefan, 49976 Osnabrück (DE)
(74) Vertreter: Kronthaler, Schmidt & Coll.
(86) Internationale Anmeldenummer: PCT/DE2005/000054
(87) Internationale Veröffentlichungsnummer: WO 2005/068238

(56) Entgegenhaltungen:
- DE-A1- 3 416 286
- DE-A1- 4 336 278
- DE-A1- 19 801 876
- US-A- 5 810 422

## Beschreibung

Die Erfindung betrifft ein Cabriolet-Fahrzeug mit einem zumindest bereichsweise einen flexiblen Bezug aufweisenden Dach nach dem Oberbegriff des Anspruchs 1.

Es ist z.B. aus der DE 198 01 876 A1 bekannt, daß bei einem Cabriolet-Fahrzeug der genannten Art der vordere Dachbereich bei geöffnetem Dach mit der starren Dachspitze nach Art eines Deckels über weiteren Bereichen des Daches liegt und zumindest überwiegend von oben offen sichtbar bleibt. Das Dach liegt dann in einer Karosserieausnehmung, die in die Karosserieaußenfläche eingelassen ist. Diese umgibt die Ausnehmung zumindest seitlich und hinten. Vorne schließt sich mittelbar oder häufig unmittelbar ein Insassenraum an.

Dabei ist einerseits für einen harmonischen Übergang der die Ausnehmung begrenzenden Kanten möglichst die hintere Begrenzung der Ausnehmung, die eine Vorderkante der weiter nach hinten anschließenden Karosserieaußenfläche darstellt, in einer Kurvenform ausgebildet, die zu den Fahrzeugseiten hin nach vorne verläuft. Funktional ist dieses auch für eine möglichst große Zugangsöffnung unterhalb einer nach hinten anschließenden Kofferraumklappe wünschenswert, die mit ihrer in Fahrtrichtung vorderen Begrenzungslinie parallel zur Vorderkante, die die Ausnehmung begrenzt, liegen soll.

Andererseits soll ein Dach der genannten Art bei seiner Öffnung hinter dem starr untergriffenen vorderen Dachbereich derart einfalten, daß die dort liegende Faltkante möglichst über die Dachbreite in Draufsicht zumindest nahezu geradlinig im 90°-Winkel zur Fahrtrichtung verläuft, um einen sauberen Bezugverlauf bei geschlossenem Dach ohne zusätzliche Stofflosebereiche oder Falten sicherzustellen.

Somit ergibt sich an der hinteren Kante der Begrenzung der Ausnehmung zumindest in den seitlichen Eckbereichen ein Konflikt zwischen der geradlinigen hinteren Kante des dann oben liegenden vorderen Dachteils und der an den Querseiten nach vorne weisenden Begrenzungskante der Ausnehmung. Wenn daher die Ecken des vorderen Dachteils bei der Dachbewegung an der Kante kollisionsfrei vorbeigeführt werden sollen, ist ein erheblicher Abstand zwischen den Teilen erforderlich. Dadurch verbleibt zumindest im Bereich der vertikalen Fahrzeuglängsmittelebene ein in Fahrzeuglängsrichtung lang erstreckter Spalt zwischen der Kante der Ausnehmung und der hinten gelegenen Faltkante des vorderen Dachteils. Derartige Spalte sind jedoch optisch unerwünscht und ermöglichen ohne weitere Maßnahmen auch einen unbefugten Zugriff in den darunter liegenden Kofferraum.

Ein Versuch, diesen Konflikt zu entschärfen, besteht darin, für den hinteren Endbereich der Ausnehmung einen schmalen, in Draufsicht annähernd sichelförmigen beweglichen Schwenkdeckel vorzusehen, dessen hintere Kante im wesentlichen quer zum Fahrzeug liegt und dessen vordere Kante die gewünschte Kurvatur mit nach vorne weisenden Querrandbereichen zeigt. Ein solcher bewegter Deckel erfordert jedoch zusätzlichen Antriebs- und Steuerungsaufwand und stört mit seinen zusätzlichen Seitenfugen das Erscheinungsbild der Karosserieaußenfläche.

Der Erfindung liegt das Problem zugrunde, die Ablage eines Daches mit in Ablagestellung in gleicher Orientierung wie in geschlossener Stellung liegendem vorderem Dachteil zu optimieren.

Die Erfindung löst dieses Problem durch ein Cabriolet-Fahrzeug mit den Merkmalen des Anspruchs 1. Hinsichtlich weiterer vorteilhafter Ausgestaltungen der Erfindung wird auf die Ansprüche 2 bis 12 erwiesen.

Mit der erfindungsgemäßen Ausbildung ist erreicht, daß die Längserstreckung des vorderen Dachbereichs durch Längenvariation von den Bezug untergreifenden starren Teilen variabel ist und somit während der Bewegung der vordere Dachbereich kürzer sein kann als etwa in geöffneter Stellung. Der Dachbereich kann daher in verkürzter Stellung an der die Karosserieausnehmung begrenzenden Kante vorbeigeführt und anschließend darunter wieder auf größere Länge ausgefahren werden. Der Durchtrittsraum des Daches durch die Karosserieaußenfläche kann daher sehr klein gehalten und muß daher nicht durch einen schwenkbaren Deckel oder dergleichen vergrößert werden -

Wenn die an die Karosserieausnehmung anschließende Kante in Offenstellung des Daches zumindest in äußeren Fahrzeugquerbereichen von dem Zusatzträger mit dem diesen übergreifenden Bezug untergriffen ist, kann die Ausnehmung der Karosserie sehr kurz gehalten werden, was dem Kofferraum und den Proportionen zugute kommt. Dennoch kann einer vorderen Kofferraumkante bei Bedarf ein die Karosserie stabilisierender Querträger an der oberen Fahrzeugaußenfläche zugeordnet sein.

Der Steueraufwand für die Längenvariabilität des vorderen Dachteils ist minimiert, wenn die.Bewegung des Zusatzträgers in Abhängigkeit des jeweiligen Bewegungszustands des Dachs steuerbar ist. Insbesondere kann der die Verlängerung bewirkende Zusatzträger über einen die Verriegelung des Daches an einem Windschutzscheibenrahmen bewirkenden Verschluß steuerbar sein. Mit dem - manuellen oder angetriebenen - Öffnen des Verschlusses fährt dann gleichzeitig der Zusatzträger nach vorne, wodurch die für die Endphase der Öffnungsbewegung notwendige Verkürzung des vorderen Dachbereichs eingestellt wird. In Ablageposition kann dann auch über ein entsprechendes Gegenglied der Karosserie derart auf den Verschluß eingewirkt werden, daß die Verlängerung des Dachbereichs unterhalb der begrenzenden Karosseriekante eingestellt wird.

Der Zusatzträger kann weiterhin den Verdeckverlauf durch Spannen des Bezuges insbesondere dann verbessern, wenn sich der Träger quer zur Fahrtrichtung erstreckt und nach Art eines den Bezug über seine gesamte Breite untergreifenden Spriegels ausgebildet ist.

Weitere Vorteile und Merkmale der Erfindung ergeben sich aus einem in der Zeichnung zumindest schematisch dargestellten und nachfolgend beschriebenen Ausführungsbeispiel des Gegenstandes der Erfindung.

In der Zeichnung zeigt:
- Fig. 1: ein erfindungsgemäßes Kraftfahrzeug in schematischer, an der vertikalen Längsmittelebene abgebrochener Ansicht von oben bei geöffnetem Dach,
- Fig. 2: eine ähnliche Ansicht wie Fig. 1, jedoch bei geschlossenem Dach,
- Fig. 3: ein Fahrzeug gemäß dem Stand der Technik in ähnlicher Ansicht wie Fig. 1,
- Fig. 4: ein schematisierter und im unteren Bereich abgebrochener Seitenschnitt im Bereich der vertikalen Längsmittelebene des erfindungsgemäßen Fahrzeugs bei geschlossenem und verriegeltem Dach,
- Fig. 5: eine ähnliche Ansicht wie Fig. 4 bei noch geschlossenem, jedoch bereits entriegeltem Dach mit nach vorne verlagertem Zusatzträger,
- Fig. 6: einen Detailausschnitt etwa entsprechend dem Ausschnitt VI in Fig. 5, bei jedoch geöffnetem Dach und noch nach vorne verlagertem Zusatzträger,

- Fig. 7: eine ähnliche Ansicht wie Fig. 6 bei geöffnetem Dach und nach hinten verlagertem Zusatzträger,

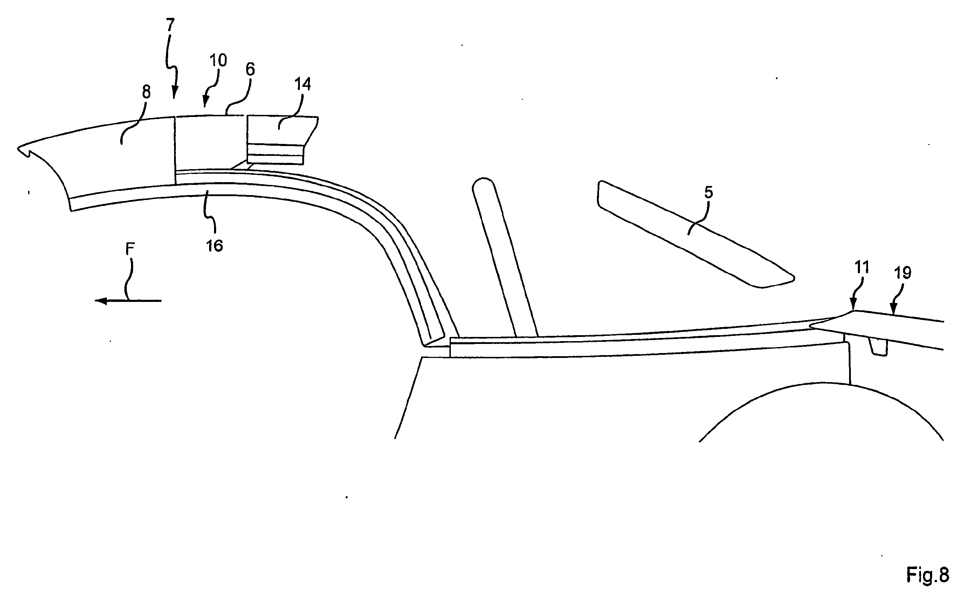

- Fig. 8: eine ähnliche Ansicht wie Fig. 4, jedoch ohne eingezeichneten Dachbezug,

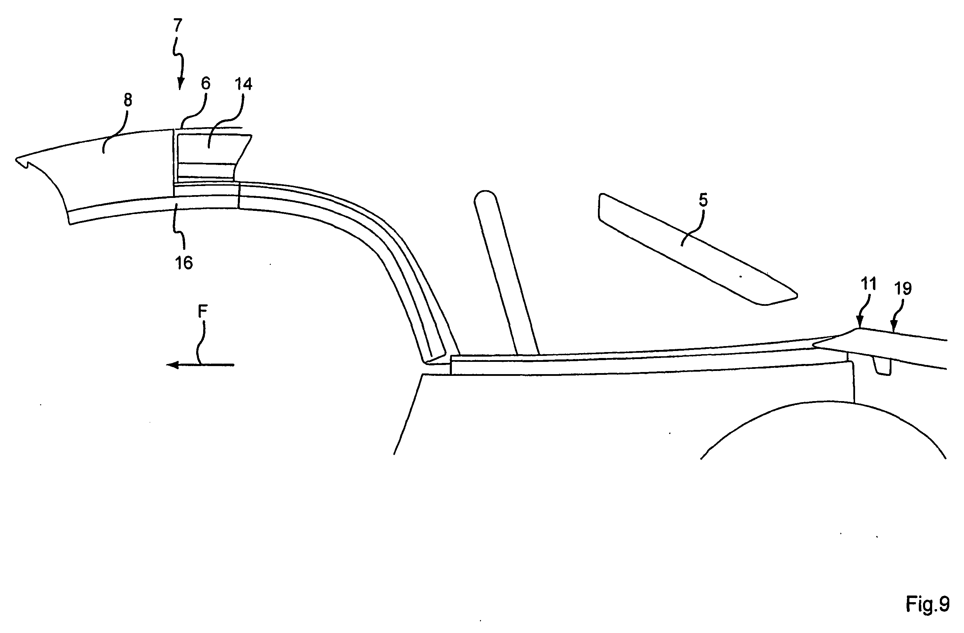

- Fig. 9: eine ähnliche Ansicht wie Fig. 5, jedoch ohne eingezeichneten Dachbezug,

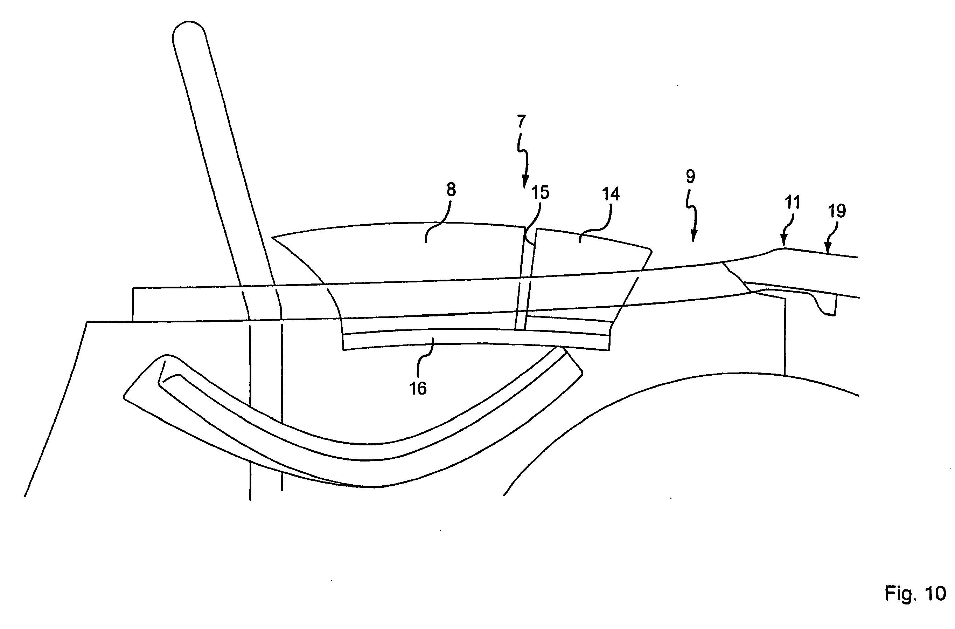

- Fig. 10: eine ähnliche Ansicht wie Fig. 6, jedoch ohne eingezeichneten Dachbezug,

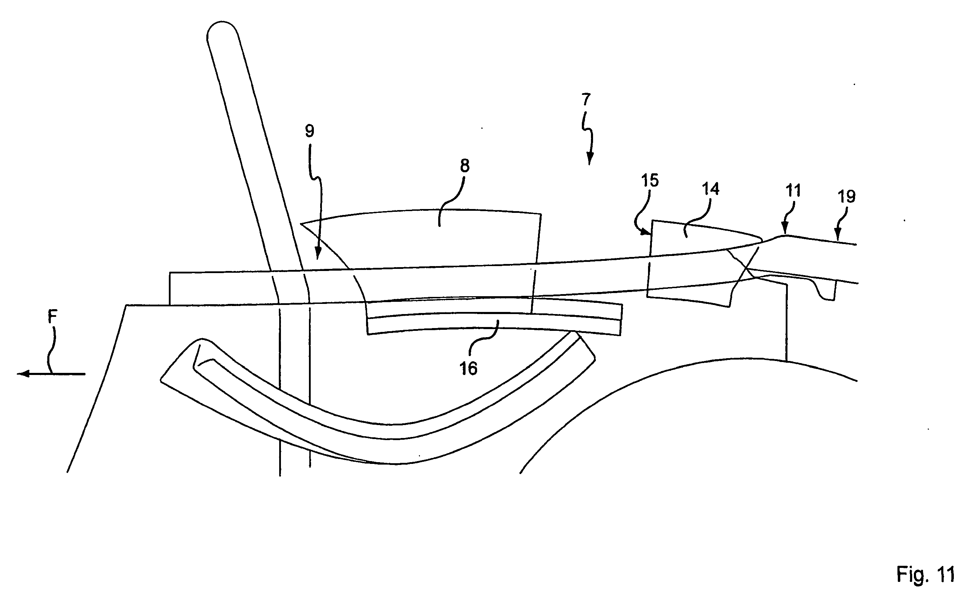

- Fig. 11: eine ähnliche Ansicht wie Fig. 7, jedoch ohne eingezeichneten Dachbezug,
- Fig. 12: eine Draufsicht auf den Heckbereich in Dachstellung nach Fig. 10,

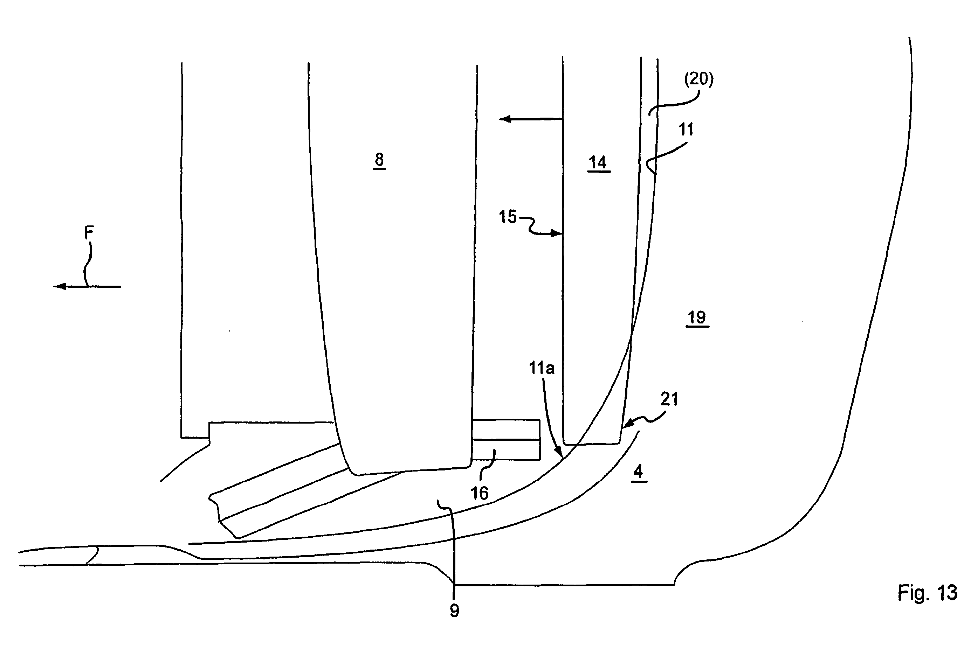

- Fig. 13: eine ähnliche Ansicht wie Fig. 12 in Dachstellung nach Fig. 11,

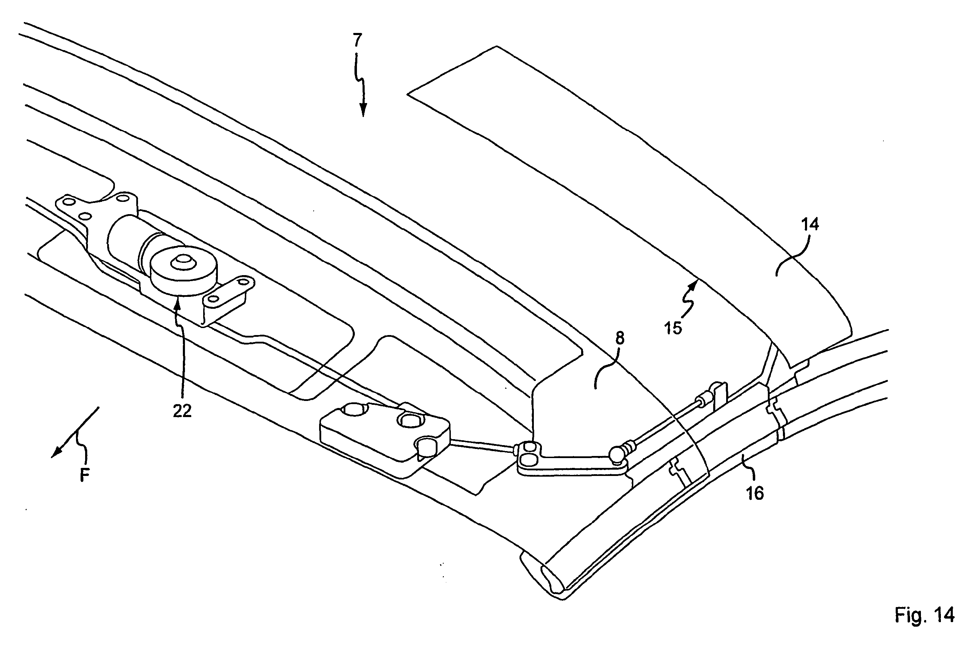

- Fig. 14: eine perspektivische Ansicht schräg von vorne mit transparent angenommenem Bezug auf die linke vordere Ecke der Dachspitze bei nach hinten verlagertem Zusatzträger,

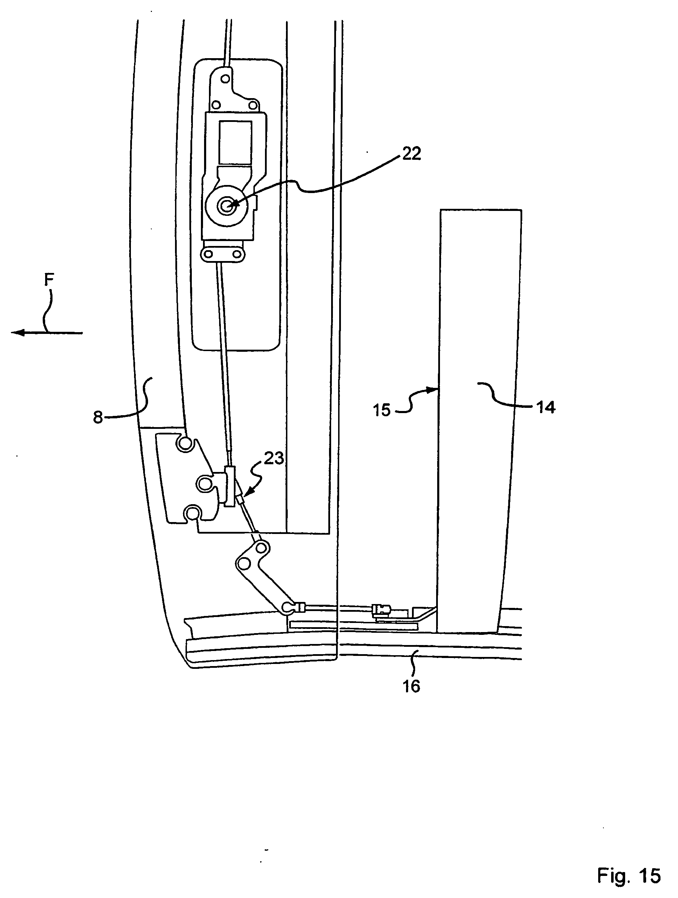

- Fig. 15: die Teile nach Fig. 14 in Draufsicht,
- Fig. 16: die Teile nach Fig. 14 in Ansicht von schräg hinten

In den Zeichnungsfiguren ist ein zweisitziges Fahrzeug 1 dargestellt. Die Erfindung ist selbstverständlich ebensogut auf ein beispielsweise mit einer Rückbank versehenes vier- oder mehrsitziges Cabriolet-Fahrzeug anwendbar.

Das Fahrzeug 1 umfaßt in seinem oberen Bereich und an einen Windschutzscheibenrahmen 2 mittelbar oder unmittelbar angrenzend ein gegenüber der Karosserie 4 bewegliches Dach 3, das außerhalb einer Heckscheibe 5 einen flexiblen Dachbezug 6 umfassen kann.

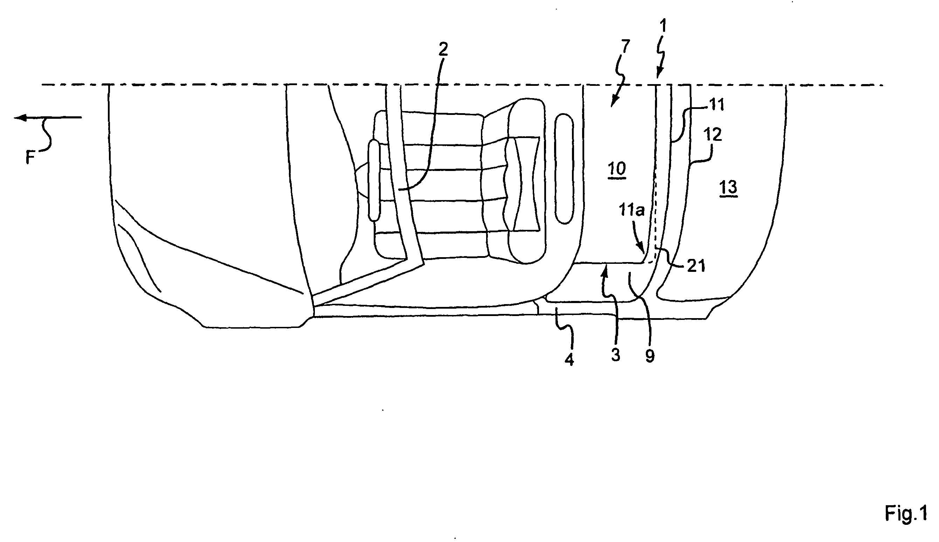

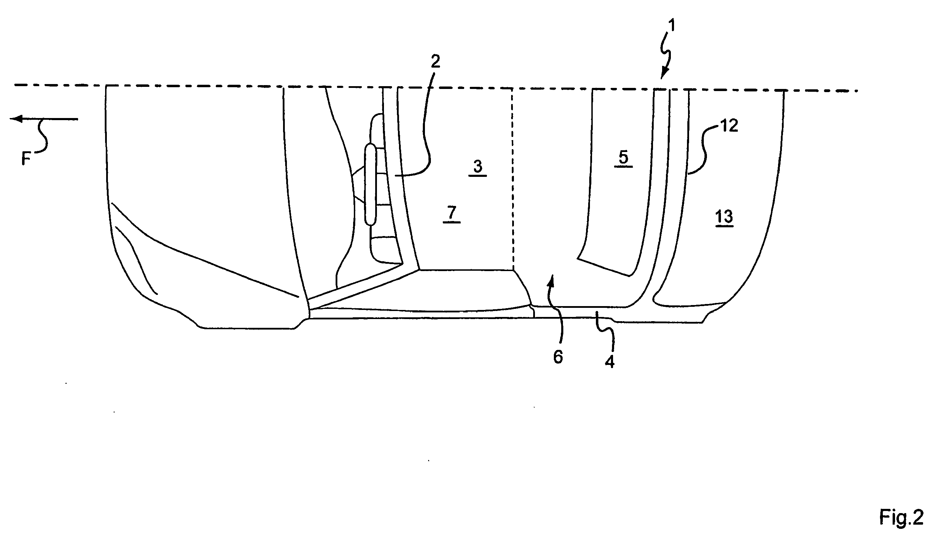

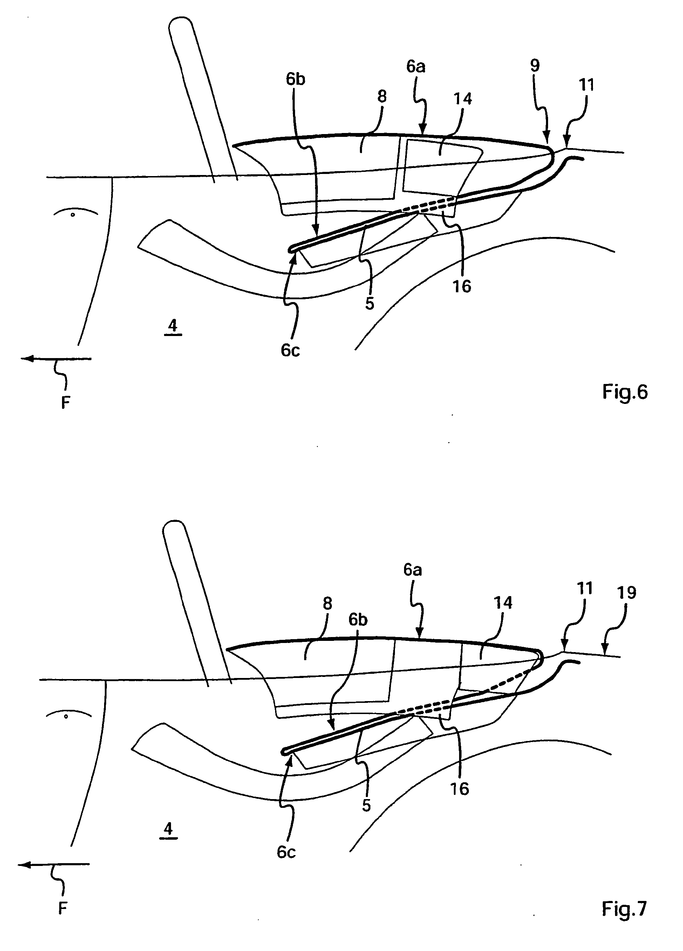

Das Dach 3 enthält in Fahrtrichtung F einen vorderen Dachbereich 7, der zumindest bereichsweise einen vom Bezug 6 übergriffenen starren Endbereich 8, eine sog. Dachspitze, umfaßt. Der vordere Dachbereich 7 ist bei Öffnung des Daches (Übergang von Fig. 1 zu Fig. 2) in gleicher Orientierung wie im geschlossenen Zustand in einer Karosserieausnehmung 9 ablegbar, d. h., daß die bei geschlossenem Dach 3 nach oben und außen zeigende Fläche 10 des vorderen Dachbereichs 7 auch in geöffnetem Zustand des Daches 3 nach oben weist. Das Dach 3 kann hierfür in einer sog. Z-Faltung ablegbar sein, wobei sich der Bezug 6 Z-förmig mit einem oberen Abschnitt 6a über der Dachspitze 8 und einem unteren Abschnitt 6c um die Heckscheibe 5 und einem diese diagonal verbindenden Zwischenabschnitt 6b ablegt (Fig. 6, Fig. 7).

Die zur Aufnahme des geöffneten Daches 3 dienende Karosserieausnehmung 9 ist rückseitig und teilweise zu den Seiten von einer Kante 11 der Karosserie begrenzt. Diese Kante 11 ist insgesamt derart gebogen, daß ihre seitlichen Abschnitte 11a eine in Fahrtrichtung F weisende Komponente umfassen. Sie liegt damit parallel zu einer vorderen Abschlußkante 12 einer Kofferraumklappe 13 bzw. kann durch diese selbst gebildet sein.

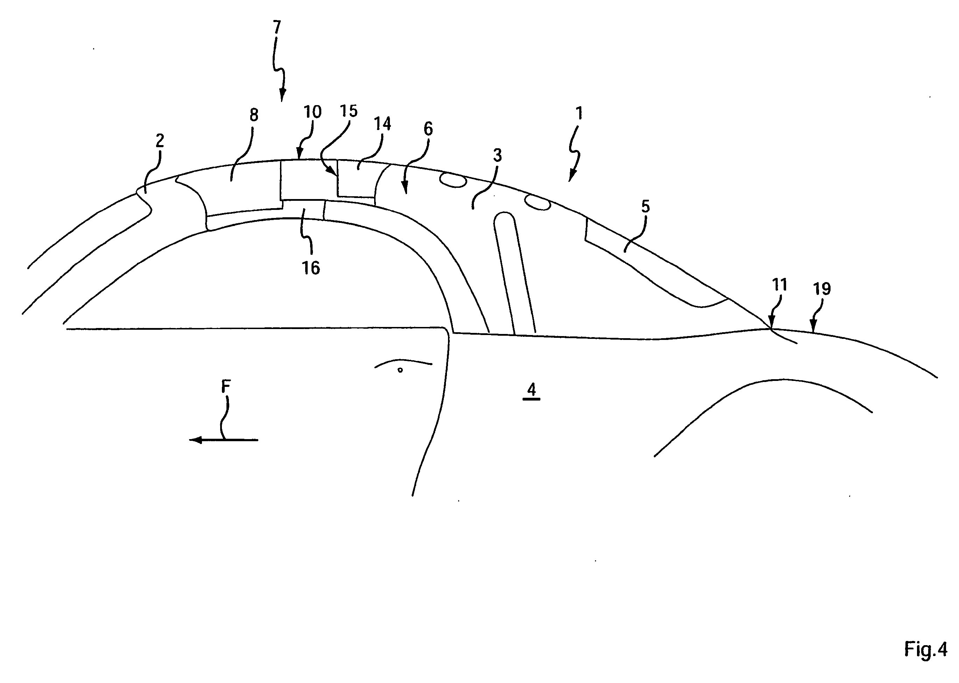

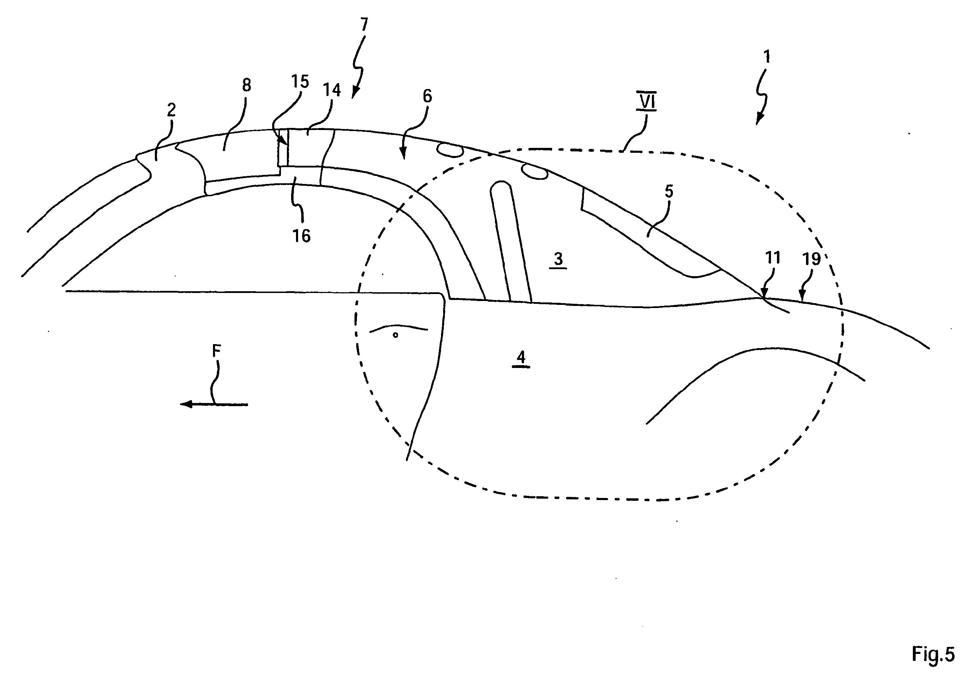

Der vordere Dachbereich 7 umfaßt weiter einen längs verlagerbaren Zusatzträger 14, der unterhalb des Bezugs 6 angeordnet und gegenüber diesem relativbeweglich sein kann. Mit Hilfe des Zusatzträgers 14 ist der vordere Dachbereich 7 zwischen der in Fig. 4 gezeigten verlängerten Stellung und der in Fig. 5 gezeigten verkürzten Stellung längenvariabel. Der Zusatzträger 14 erstreckt sich quer zur Fahrtrichtung F über die gesamte Breite des Bezugs 6 und kann diesen nach Art eines Spriegels unterstützen, was insbesondere im geschlossenen Zustand des Daches 3 (Fig. 4) einen gespannten und nahezu knickfreien Strackverlauf sicherstellen kann.

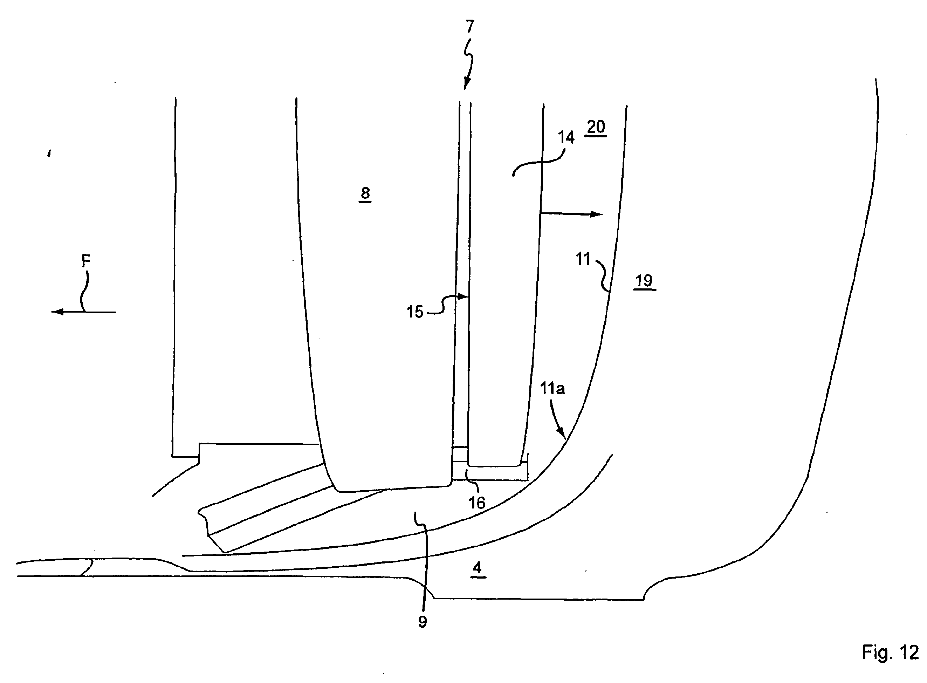

Der Zusatzträger 14 umfaßt in Draufsicht eine gegenüber einem Spriegel breitere Rechteckfläche (sh. z. B. Fig. 12 ff.) und kann mit seiner vorderen Kante 15 bündig an die Dachspitze 8 anschließen, so daß beide gemeinsam eine starre Auflagefläche für den Bezug 6 bilden. Die hintere Kante des Zusatzträgers 14 kann ggf. geringfügig an den Verlauf der Kante 11 angepaßt sein.

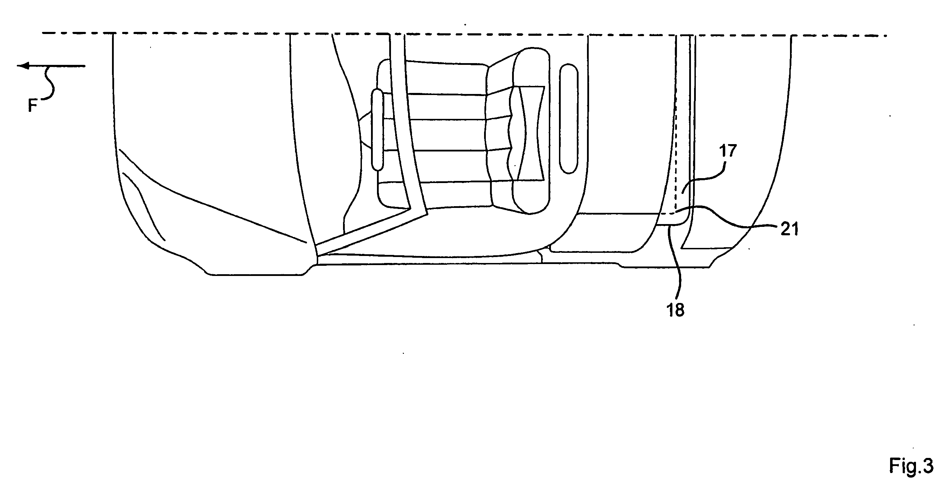

In geschlossener Dachstellung (Fig. 4) ist der Zusatzträger 14 in seiner nach hinten ausgefahrenen Stellung, in der er den vorderen Dachbereich 7 über das Maß von mit der Dachspitze 8 starr verbundenen vorderen Seitenrahmen 16 verlängert, wodurch sich die oben geschilderte positive Beeinflussung des Bezugsverlaufs ergibt. Wollte man in dieser Stellung das Dach 3 öffnen und in die Ausnehmung 9 absenken, müßte jedoch die Begrenzungskante 11 sehr weit nach hinten verlegt sein, oder es müßte, wie in Fig. 3 gezeichnet ist, ein zusätzlicher Schwenkdeckel 17 vorgesehen sein, der zum Durchtritt des Daches 3 öffnen kann und damit eine Kollision der gestrichelt eingezeichneten Eckbereiche 21 mit der Karosserie 4 vermeidet Dies erfordert jedoch den geschilderten zusätzlichen Steuerungsaufwand und bedingt optisch nicht vorteilhafte weitere Fugen 18.

Daher ist erfindungsgemäß der Zusatzträger 14 zur Dachöffnung in die in Fig. 5 gezeigte vordere Stellung verlagerbar, in der das vordere Dachteil 5 verkürzt ist und somit weniger Platz in Fahrzeuglängsrichtung benötigt. Diese Stellung ist die Bewegungsstellung des Daches 3, in der es in die Karosserie 4 eingelegt werden kann. Der Durchtritt durch die Karosserieaußenfläche 19 ist in Fig. 12 von oben dargestellt. Dabei wird deutlich, daß durch die seitlichen Rahmenteile 16 gerade noch vor der Kante 11 kollisionsfrei in die Ausnehmung 9 gelangen können, ohne daß die Kante 11 beweglich sein muß. Die Ausnehmung 9 kann daher minimale Ausmaße haben.

Dennoch kann der Spalt 20 zwischen vorderem Dachteil 7 und der Kante 11 durch anschließendes Wiederausfahren des im Ausführungsbeispiel einstückigen Zusatzträgers 14 geschlossen werden, so daß der Bezug 6 der Fläche 10 auch in abgelegter Stellung straff gespannt ist und zumindest nahezu die gesamte Tiefe der Ausnehmung 9 übergreift. Ein optisch unvorteilhafter und mit der Gefahr des Eingreifens verbundener Spalt 20 ist daher minimiert. Die Ecken 21 des vorderen Dachbereichs 7 können dabei durch Ausfahren des Zusatzträgers 14 bis unter die Kante 11 in Seitenbereichen 11a verlagert werden.

Der Zusatzträger 14 kann sich somit sowohl bei geschlossenem als auch bei vollständig geöffnetem Dach 3 in seiner maximal nach hinten verlagerten und den Bezug 6 spannenden Stellung befinden, wohingegen er zumindest in der Durchtrittsphase des Dachbereichs 7 durch die Außenfläche 19 nach vorne verlagert ist. Um hierfür die Steuerung so einfach wie möglich zu gestalten, ist die Verlagerung des Zusatzträgers 14 mit einem eine Verriegelung des Daches 3 am Windschutzscheibenrahmen 2 bewirkenden Verschluß 22 gekoppelt. Die Kopplung kann beispielhaft derart ausgebildet sein, daß bei manuellem oder angetriebenem Lösen der Verriegelung (Übergang von Fig. 4 zu Fig. 5) über ein Zug-Schub-Gestänge 23, Federn, Bowdenzüge oder ähnliche konstruktive Elemente der Zusatzträger 14 in Fahrtrichtung nach vorne gezogen wird, in dieser Stellung während der gesamten Dachbewegung verbleibt und erst in abgelegter Stellung des Daches 3 (Übergang von Fig. 6 zu Fig. 7) durch ein Einrasten des Verschlusses 22 an der Karosserie 4 wieder nach hinten verlagert wird.

Die Verlagerung kann eine reine Translation, etwa in einer Kulisse, oder eine Überlagerung mit einer Schwenkbewegung, etwa über ein Parallelogramm, sein. Auch muß der Zusatzträger nicht, wie hier gezeigt, einstückig sein.

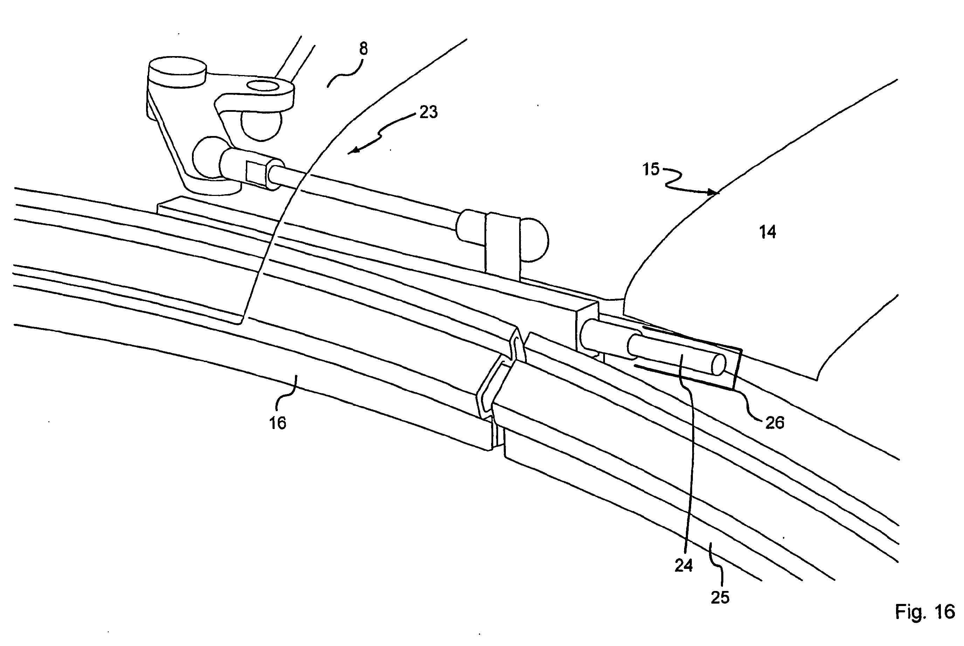

Eine zusätzliche Verriegelung des ersten und zweiten Dachrahmenteils 16, 25 ist über einen mit dem Zusatzträger nach hinten ausfahrendes Verriegelungsglied 24 möglich und in Fig. 16 dargestellt. Das Verriegelungsglied 24 kann beispielsweise in eine mit dem zweiten Dachrahmenteil 25 fest verbundene Hülse 26 (Fig. 16) eingreifen.

Die Erfindung ist sowohl für manuell als auch für halb- oder vollautomatisch zu bewegende Dächer 3 verwendbar.

## Patentansprüche

1. Cabriolet-Fahrzeug (1) mit einem zumindest bereichsweise mit einem flexiblen Bezug (6) versehenen Dach (3), das in seinem vorderen Dachbereich (7) einen vom Bezug (6) übergriffenen starren Endbereich (8), eine sog. Dachspitze, umfaßt, wobei der vordere Dachbereich (7) in gleicher Orientierung wie im geschlossenen Dachzustand in oder bereichsweise oberhalb einer Karosserieausnehmung (9) ablegbar ist, die zumindest rückwärtig von einer Kante (11) der Karosserie (4) begrenzt ist, **dadurch gekennzeichnet, daß** der vordere Dachbereich (7) durch zumindest einen den Dachbezug (6) untergreifenden und in Fahrzeuglängsrichtung verlagerbaren Zusatzträger (14) längenveränderlich ist.

2. Cabriolet-Fahrzeug (1) nach Anspruch 1,
**dadurch gekennzeichnet**, daβ die an die Karosserieausnehmung (9) anschließend suckwärtige Kante (11) in Offenstellung des Daches (3) zumindest in äußeren Fahrzeugquerbereichen (11a) von dem Zusatzträger (14) mit dem diesen übergreifenden Bezug (6) untergriffen ist.

3. Cabriolet-Fahrzeug (1) nach einem der Ansprüche 1 oder 2, **dadurch gekennzeichnet, daß** die Bewegung des Zusatzträgers (14) in Abhängigkeit des jeweiligen Bewegungs-zustands des Dachs (3) steuerbar ist.

4. Cabriolet-Fahrzeug (1), nach einem der Ansprüche 1 bis 3, **dadurch gekennzeichnet, daß** der Zusatzträger (14) über einen die Verriegelung des Daches (3) an einem Windschutzscheibenrahmen (2) bewirkenden Verschluß (22) steuerbar ist.

5. Cabriolet-Fahrzeug (1) nach einem der Ansprüche 1 bis 4, **dadurch gekennzeichnet, daß** der Zusatzträger (14) sowohl in geschlossener als auch in vollständig geöffneter Stellung des Daches (3) entgegen der Fahrtrichtung (F) nach hinten ausgefahren ist.

6. Cabriolet-Fahrzeug (1) nach einem der Ansprüche 1 bis 5, **dadurch gekennzeichnet, daß** der Zusatzträger (14) während der Öffnungs- oder Schließbewegung des Daches (3) in Fahrtrichtung (F) nach vorne verlagert ist.

7. Cabriolet-Fahrzeug (1) nach einem der Ansprüche 1 bis 6, **dadurch gekennzeichnet, daß** der Zusatzträger (14) quer zur Fahrtrichtung (F) erstreckt ist.

8. Cabriolet-Fahrzeug (1) nach einem der Ansprüche 1 bis 7, **dadurch gekennzeichnet, daß** der zusatzträger (14) nach Art eines den Bezug (6) über seine gesamte Breite untergreifenden Spriegels ausgebildet ist.

9. Cabriolet-Fahrzeug (1) nach einem der Ansprüche 1 bis 8, **dadurch gekennzeichnet, daß** der Zusatzträger (14) eine in Draufsicht im wesentlichen rechteckige Fläche umfaßt und mit seiner quer zur Fahrtrichtung (F) liegenden vorderen Kante (15) in nach vorne verlagerter Stellung zumindest nahezu bündig an die Dachspitze (8) anschließt.

10. Cabriolet-Fahrzeug (1) nach einem der Ansprüche 1 bis 9,
**dadurch gekennzeichnet,**
**daß** die an die Karosserieausnehmung (9) anschließende Kante (11) zumindest bereichsweise die Vorderkante (12) einer Kofferraumklappe (13) ist.

11. Cabriolet-Fahrzeug (1) nach einem der Ansprüche 1 bis 9,
**dadurch gekennzeichnet,**
**daß** die an die Karosserieausnehmung anschließende Kante zumindest bereichsweise die Vorderkante eines einer Kofferraumklappe (13) vorgeordneten Querriegels der Karosserieaußenfläche (19) ist.

12. Cabriolet-Fahrzeug (1) nach einem der Ansprüche 1 bis 11,
**dadurch gekennzeichnet,**
**daß** durch den verlagerbaren Zusatzträger (14) eine Verriegelung von einem ersten und einem zweiten Dachrahmenteil (16;25) bewirkbar ist.

## Claims

1. A convertible vehicle (1) with a roof (3) which is provided at least partially with a flexible cover (6), said roof (3) comprising in its front roof region (7) a rigid end region (8), also known as a roof tip, over which the cover (6) extends, which front roof region (7) can be stowed in the same orientation as in the closed-roof state in or partially above a recess (9) in the vehicle body, which recess (9) is bordered at least at the rear by an edge (11) of the vehicle body (4), **characterised in that** the front roof region (7) is variable in length by means of at least one additional support (14), which engages the roof cover (6) from below and is displaceable in the longitudinal direction of the vehicle.

2. The convertible vehicle (1) according to claim 1, **characterised in that**, in the open position of the roof (3), the additional support (14) with the cover (6) extending over it engages the rear edge (11), which adjoins the recess (9) in the vehicle body, from below at least in outer transverse vehicle regions (11a).

3. The convertible vehicle (1) according to any one of claims 1 or 2, **characterised in that** the movement of the additional support (14) can be controlled as a function of the respective state of movement of the roof (3).

4. The convertible vehicle (1) according to any one of claims 1 to 3, **characterised in that** the additional support (14) can be controlled by a latch (22) causing the roof (3) to be latched onto a windscreen frame (2).

5. The convertible vehicle (1) according to any one of claims 1 to 4, **characterised in that** the additional support (14) is extended to the rear, opposite the direction of travel (F), both in the closed position and in the fully opened position of the roof (3).

6. The convertible vehicle (1) according to any one of claims 1 to 5, **characterised in that** the additional support (14) is displaced forwardly in the direction of travel (F) during the opening or closing movement of the roof (3).

7. The convertible vehicle (1) according to any one of claims 1 to 6, **characterised in that** the additional support (14) extends transversely to the direction of travel (F).

8. The convertible vehicle (1) according to any one of claims 1 to 7, **characterised in that** the additional support (14) is provided as a bow engaging the cover (6) from below over its entire width.

9. The convertible vehicle (1) according to any one of claims 1 to 8, **characterised in that** the additional support (14) comprises an area which, when viewed from above, is substantially rectangular and whose front edge (15) extending transversely to the direction of travel (F) is at least nearly flush with the roof tip (8) in its forwardly displaced position.

10. The convertible vehicle (1) according to any one of claims 1 to 9, **characterised in that** the edge (11) adjoining the recess (9) in the vehicle body is at least partially the front edge (12) of a boot lid (13).

11. The convertible vehicle (1) according to any one of claims 1 to 9, **characterised in that** the edge adjoining the recess in the vehicle body is at least partially the front edge of a transverse brace of the vehicle body's outer surface (19), said brace being arranged in front of a boot lid (13).

12. The convertible vehicle (1) according to any one of claims 1 to 11, **characterised in that** the displaceable additional support (14) can effect the locking of first and second roof frame parts (16;25).

## Revendications

1. Véhicule cabriolet (1) avec un toit (3) présentant au moins partiellement une enveloppe flexible (6), ledit toit (3) comprenant, dans sa région de toit avant (7) une région d'extrémité rigide (8), dite sommet de toit, au-dessus de laquelle s'étend l'enveloppe (6), ladite région de toit avant (7) étant déposable, dans la même orientation qu'en état fermé du toit, dans ou partiellement au-dessus d'un évidement (9) de la carrosserie, ledit évidement (9) étant limité au moins à l'arrière par un bord (11) de la carrosserie (4), **caractérisé en ce que** la région de toit avant (7) est variable en longueur au moyen d'au moins un support additionnel (14), venant en prise dans l'enveloppe de toit (6) de dessous et étant déplaçable en direction longitudinale du véhicule.

2. Véhicule cabriolet (1) selon la revendication 1, **caractérisé en ce que**, dans la position ouverte du toit (3), le support additionnel (14) avec l'enveloppe (6) s'étendant au-dessus de celui-ci vient en prise de dessous dans le bord arrière (11) au moins dans des régions extérieures transversales (11a) du véhicule, ledit bord arrière (11) étant contigu à l'évidement (9) de la carrosserie.

3. Véhicule cabriolet (1) selon l'une quelconque des revendications 1 ou 2, **caractérisé en ce que** le déplacement du support additionnel (14) peut être commandé selon l'état de mouvement respectif du toit (3).

4. Véhicule cabriolet (1) selon l'une quelconque des revendications 1 à 3, **caractérisé en ce que** le support additionnel (14) peut être commandé par un verrou (22) effectuant le verrouillage du toit (3) sur un cadre de pare-brise (2).

5. Véhicule cabriolet (1) selon l'une quelconque des revendications 1 à 4, **caractérisé en ce que** le support additionnel (14) est étendu vers l'arrière, à l'opposée de la direction de marche (F), aussi bien dans la position ouverte que dans la position fermée du toit (3).

6. Véhicule cabriolet (1) selon l'une quelconque des revendications 1 à 5, **caractérisé en ce que** le support additionnel (14) est déplacé vers l'avant, dans la direction de marche (F), lors du mouvement d'ouverture ou de fermeture du toit (3).

7. Véhicule cabriolet (1) selon l'une quelconque des revendications 1 à 6, **caractérisé en ce que** le support additionnel (14) s'étend transversalement à la direction de marche (F).

8. Véhicule cabriolet (1) selon l'une quelconque des revendications 1 à 7, **caractérisé en ce que** le support additionnel (14) est réalisé sous forme d'un arceau qui vient en prise de dessous dans l'enveloppe (6) sur toute la largeur de cette dernière.

9. Véhicule cabriolet (1) selon l'une quelconque des revendications 1 à 8, **caractérisé en ce que** le support additionnel (14) comprend une région qui, vue de dessus, est sensiblement rectangulaire et dont le bord avant (15), s'étendant transversalement à la direction de marche (F), forme une surface au moins presque plane avec le sommet de toit (8) dans sa position déplacée vers l'avant.

10. Véhicule cabriolet (1) selon l'une quelconque des revendications 1 à 9, **caractérisé en ce que** le bord (11) contigu à l'évidement (9) de la carrosserie est au moins partiellement le bord avant (12) d'un couvercle de coffre (13).

11. Véhicule cabriolet (1) selon l'une quelconque des revendications 1 à 9, **caractérisé en ce que** le bord contigu à l'évidement de la carrosserie est au moins partiellement le bord avant d'une barre transversal de la face extérieure de la carrosserie (19), ledit barre étant disposé devant un couvercle de coffre (13).

12. Véhicule cabriolet (1) selon l'une quelconque des revendications 1 à 11, **caractérisé en ce que** le support additionnel déplaçable (14) peut effectuer un verrouillage d'un premier et d'un deuxième élément de cadre de toit (16;25).
